# EUROPEAN PATENT APPLICATION

(11) **EP 3 254 994 A1**
(43) Date of publication of application: **13.12.2017**
(21) Application number: 16305689.8
(22) Date of filing: 10.06.2016
(51) Int. Cl.: B65G 43/08, B65G 47/32, B65G 47/86

(54) **A CONVEYING WHEEL FOR TRANSPORTING ARTICLES AND AN APPARATUS FOR HANDLING ARTICLES INCLUDING AT LEAST ONE SUCH CONVEYING WHEEL**

(71) Applicant: SIDEL PARTICIPATIONS, 76930 Octeville-sur-Mer (FR)
(72) Inventor: PINI, Stefano, 43126 Parma (IT); ZONI, Roberto, 43126 Parma (IT); FORNI, Lorenzo, 43126 Parma (IT)
(74) Representative: Siloret, Patrick

(57) **Abstract**

There is described a conveying wheel (4) for transporting articles (2), in particular containers or bottles, comprising: a fixed support structure (11); a plurality of gripping members (10) mounted on the support structure (11) in a movable manner along an annular transport path (T) and configured to hold and transport individual articles (2); an annular guide element (30) carried by the support structure (11) and extending coaxial to the transport path (T); and driving means (62, 35) to move the gripping members (10) independently from each other along the guide element (30) .

## Description

### TECHNICAL FIELD

The present invention relates to a conveying wheel for transporting articles, in particular containers, such as bottles, especially in plastic material, which the following description will refer to, although this is in no way intended to limit the scope of protection as defined by the accompanying claims.

The present invention also relates to an apparatus for handling articles, in particular containers or more specifically bottles.

### BACKGROUND ART

As known, a wide range of plastic bottles are formed in carousel-type or wheel-type blow moulding machines from plastic preforms. In particular, the heated preforms are accommodated in correspondingly designed blow moulds of the blow moulding machine and are then blown, during rotation of the blow moulding machine, under high pressure and high temperature to form respective bottles.

The bottles exiting from the blow moulding machine are then transferred to a carousel-type or wheel-type filling machine, where such bottles are filled with a pourable product of the above-mentioned type. At this point, the bottles are capped in a carousel or wheel and subsequently transferred to a further carousel- or wheel-type labelling machine for applying one or more labels on the external surface of the bottles themselves. Then, the bottles are grouped and packed in packaging units to be then delivered to store houses.

In practice, all the mentioned machines define a plurality of handling stations crossed by the preforms and the bottles prior to reaching the final configuration in which the bottles themselves are sold.

In case of other types of containers, such as glass bottles or cans, the handling stations do not include blow moulding machines and can additionally comprise cleaning or rinsing machines, sterilizing machines, drying machines, and so on.

In all these cases, the processing speeds and the respective velocities with which the bottles need to be conveyed may vary from one handling station to another and the possible differences in conveying velocities need to be compensated during the transport of the bottles themselves. Additionally, an irregular supply of bottles may arise due to e.g. the rejection of one or more defective bottles. Furthermore, it may be desired to have a change of velocity of the bottles within one given handling station.

Transfer of bottles between the various handling stations is typically performed by using linear conveyors and star wheels.

An example of a star or conveying wheel capable of compensating for differences in processing speeds of consecutive handling stations is disclosed in US2012/0285800. This kind of star wheel comprises:
- a fixed support structure;
- a movable portion mounted on the support structure in a rotating manner about a central axis; and
- a plurality of gripping members carried by the movable portion and configured to be selectively moved independently from each other with respect to the movable portion itself.

In particular, each gripping member is carried by a respective supporting arm, radially protruding from the movable portion of the star wheel and in turn swiveling about fulcrum points peripherally arranged on the movable portion itself; in addition, each supporting arm defines, along its length, a linear guide on which the respective gripping member can slide.

This solution requires one motor to rotate the movable portion of the star wheel, and two further motors for each gripping member: one for producing the swiveling of the respective supporting arm and the other one for producing the linear movement of such gripping member along the guide of the supporting arm itself. This huge number of motors tends not only to increase the weight of the movable parts transported by the star wheel, but also to complicate the control of the positions of the gripping members on the star wheel itself and finally the whole cost thereof.

Furthermore, the presence of the supporting arms, that radially protrude from the body of the star wheel, necessarily increases the bulk of the star wheel itself.

### DISCLOSURE OF INVENTION

It is therefore an object of the present invention to provide a conveying wheel for transporting articles, which is capable of changing pitch and velocity of the transported articles and which at the same time allows to overcome, in a straightforward and low-cost manner, the drawbacks associated with the conveying wheels of known type.

According to the present invention, there is provided a conveying wheel for transporting articles as claimed in claim 1.

The present invention also relates to an apparatus for handling articles as claimed in claim 10.

### BRIEF DESCRIPTION OF THE DRAWINGS

Two preferred embodiments are hereinafter disclosed for a better understanding of the present invention, by mere way of non-limitative examples and with reference to the accompanying drawings, in which:
Figure 1 shows a top plan view of an apparatus according to the present invention for handling articles, in particular bottles, with parts removed for clarity;
Figure 2 shows a larger-scale side perspective view of a conveying wheel of the apparatus of Figure 1, with parts removed for clarity;
Figure 3 shows a larger-scale side perspective view of an operative portion of the conveying wheel of Figure 2, with parts removed for clarity;
Figures 4 and 5 show two different smaller-scale bottom perspective views of the operative portion of the conveying wheel of Figure 2;
Figure 6 shows a larger-scale bottom plan view of the operative portion of the conveying wheel of Figure 5;
Figures 7 and 8 show larger-scale bottom views of one gripping member of the operative portion of the conveying wheel of Figure 6, in two different positions; and
Figure 9 is analogous to Figure 1 and shows a top plan view of a different embodiment of the apparatus according to the present invention, with parts removed for clarity.

### BEST MODE FOR CARRYING OUT THE INVENTION

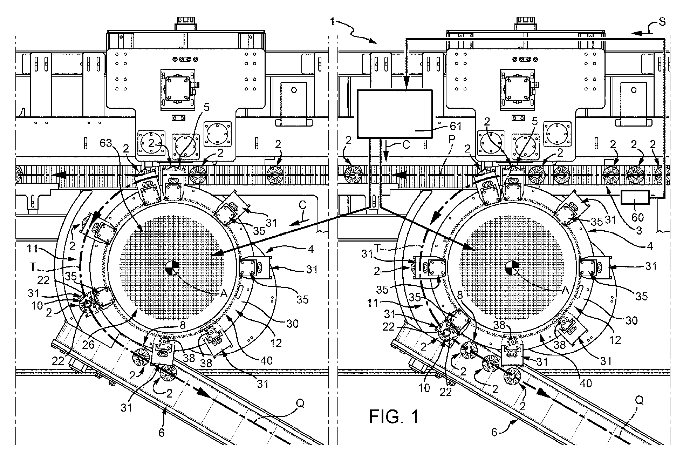

Number 1 in Figure 1 indicates as a whole an apparatus made according to the present invention for handling articles, in particular containers and preferably bottles 2, which the following description will specifically refer to without any limitative effect.

Apparatus 1 basically comprises:
- a primary conveyor 3 advancing a plurality of bottles 2 lined up one after the other along a first path P;
- one or more conveying wheels 4, two in the example shown in Figure 1, arranged adjacent to primary conveyor 3 at respective pick-up stations 5 and each one configured to selectively pick up bottles 2 from primary conveyor 3 at the relative pick-up station 5 and to transfer them away from the pick-up station 5 itself; and
- a number of secondary conveyors 6 corresponding to the number of conveying wheels 4, arranged adjacent to the respective conveying wheels 4 at respective outlet stations 8 and each one configured to receive, at the relative outlet station 6, the bottles 2 picked up from primary conveyor 3 and to advance such bottles 2 along a respective path Q, distinct from path P.

Primary conveyor 3 is configured to advance bottles 2 at a constant velocity V1, whilst secondary conveyors 6 are configured to advance the bottles 2 at constant velocities V2 and V3 respectively, which are preferably different from the velocity V1. Velocities V2 and V3 may be different or equal to one another.

The pitch of the bottles 2 on primary conveyor 3 might be also different from the pitches on secondary conveyors 6.

Each conveying wheel 4 is configured to change pitch and velocity of bottles 2 from the relative pick-up station 5 to the relative outlet station 8 in order to adapt it to the velocity V2 or V3 of the bottles 2 on the respective secondary conveyor 6.

As shown in Figure 1, primary and secondary conveyors 3, 6 are preferably linear conveyors, in particular belt conveyors, and paths P and Q preferably have linear and horizontal configurations.

More specifically, each of primary and secondary conveyors 3, 6 comprises an upper and horizontal transport branch, along which bottles 2 are advanced in upright positions with their necks above their bases, and a return branch located below the upper transport branch.

Bottles 2 rest with their bases on upper transport branches of primary and secondary conveyors 3, 6 and are transferred by conveying wheel 4 in suspended positions by their necks.

In the specific example shown, bottles 2 are preferably filled and capped.

The upper transport branches of primary and secondary conveyors 3, 6 respectively define paths P, Q.

As a possible alternative not shown, primary and/or secondary conveyors 3, 6 may be also defined by other types of conveyors, such as star wheel conveyors or carousel conveyors.

Primary and/or secondary conveyors 3, 6 as well as conveying wheel 4 may be also part of bottle or container handling machines, such as blow moulding machines, filling machines, capping machines, labelling machines, etc.

As visible in Figure 1, conveying wheels 4 are preferably star wheels, have respective vertical central axes A parallel to one another and are placed one after the other along path P. Conveying wheels 4 are provided on their peripheries with respective pluralities of gripping members 10 (described in greater detail later on) moving along respective annular, i.e. circular, paths T of respective axes A.

Paths T of gripping members 10 of conveying wheels 4 are tangent to path P at respective pick-up stations 5. Paths Q are tangent to respective paths T at respective outlet stations 8 and exit tangentially therefrom.

By considering each conveying wheel 4, the pick-up and outlet stations 5, 8 are spaced from one another by a given arc about the respective axis A depending on the desired layout of apparatus 1. In the specific example shown in Figure 1, pick-up and outlet stations 5, 8 of each conveying wheel 4 are spaced by an arc comprised between 90° and 180° about the respective axis A; in addition, said arc is the same for both conveying wheels 4; hence, in the example shown, paths Q defined by secondary conveyors 6 are parallel to one another.

As a possible alternative not shown, the angular distance between the pick-up and outlet stations 5, 8 may be different in the various conveying wheels 4 and therefore paths Q may diverge or converge.

As clearly visible in Figure 1, gripping members 10 of each conveying wheel 4 extend partially above primary conveyor 3 at the respective pick-up station 5 and in the immediate vicinity thereof; gripping members 10 of each conveying wheel 4 also extend partially above the respective secondary conveyor 6 at the respective outlet station 8 and in the immediate vicinity thereof.

Since conveying wheels 4 are identical to one another, only one is described in detail herein, by indicating the same or corresponding parts of the other conveying wheel 4 with the same reference numbers in the accompanying drawings.

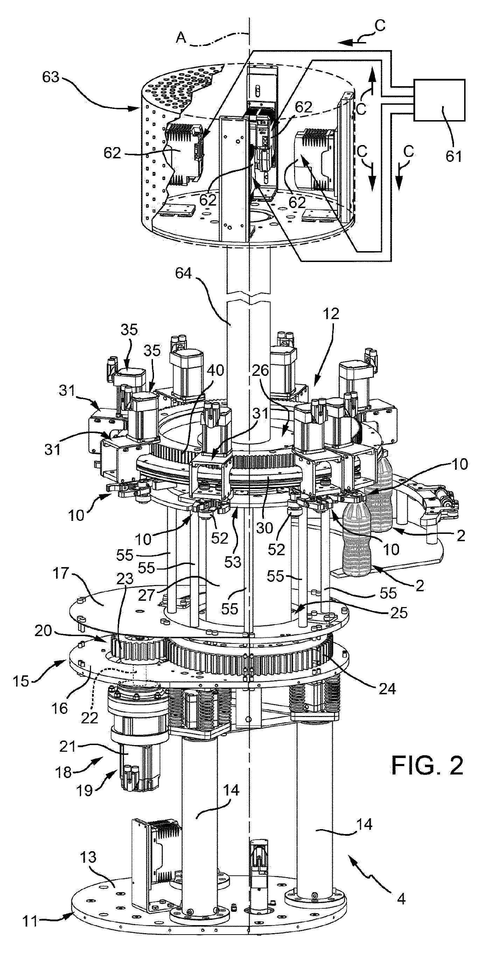

With reference to Figures 2 to 8, conveying wheel 4 basically comprises:
- a fixed support structure 11;
- a movable portion 12 mounted on support structure 11 in a rotating manner about axis A; and
- gripping members 10 carried by movable portion 12, movable along path T with respect to support structure 11 and configured to selectively pick up respective bottles 2 from primary conveyor 3 at pick-up station 5, to advance such bottles 2 away from the pick-up station 5 itself and to release the above bottles 2 at outlet station 8 on respective secondary conveyor 6.

In particular, support structure 11 comprises a base plate 13, a plurality of uprights 14, projecting from base plate 13 parallel to axis A and arranged around the axis A itself, and an upper frame 15 placed on top of uprights 14; movable portion 12 is mounted above upper frame 15 and vertically projects therefrom.

More specifically, upper frame 15 comprises two plates 16, 17 spaced from one another along axis A and extending parallel to base plate 13; plate 16 faces base plate 13, whilst plate 17 is arranged above plate 16.

Conveying wheel 4 further comprises actuator means 18 carried by support structure 11 and selectively activated to rotate movable portion 12 about axis A. In particular, actuator means 18 comprise an electric motor 19, carried by support structure 11 parallel to axis A, and a gear transmission 20 for transmitting motion from motor 19 to movable portion of conveying wheel 4.

In greater details, motor 19 comprises a casing 21, secured to a lower face of plate 16 and projecting therefrom towards base plate 13, and an output shaft 22 extending parallel to axis A, supported by casing 21 in a rotating manner about its axis and extending through an opening of the plate 16 itself towards the region delimited between the plates 16 and 17.

Gear transmission 20 includes a pinion 23, angularly and coaxially coupled to output shaft 22 of motor 19, and a driven gear 24 coaxial to axis A, meshing with pinion 23 and angularly coupled to movable portion 12 through an opening 25 of plate 17.

Movable portion 12 comprises a substantially disk-shaped rotating table 26 coaxial to axis A, arranged above upper frame 15, peripherally carrying gripping members 10 and angularly coupled to gear 24 by means of a shaft 27 extending through opening 25 of plate 17. More specifically, rotating table 26 is secured on top of shaft 27 and extends parallel to plates 13, 16 and 17.

Movable portion 12 of conveying wheel 4 advantageously comprises:
- an endless or annular guide element 30 secured or integral to a peripheral portion of rotating table 26 and extending parallel to path T; and
- a plurality of individual carriages 31 coupled in a sliding manner with guide element 30, carrying the respective gripping members 10 and driven along the guide element 30 itself independently from each other.

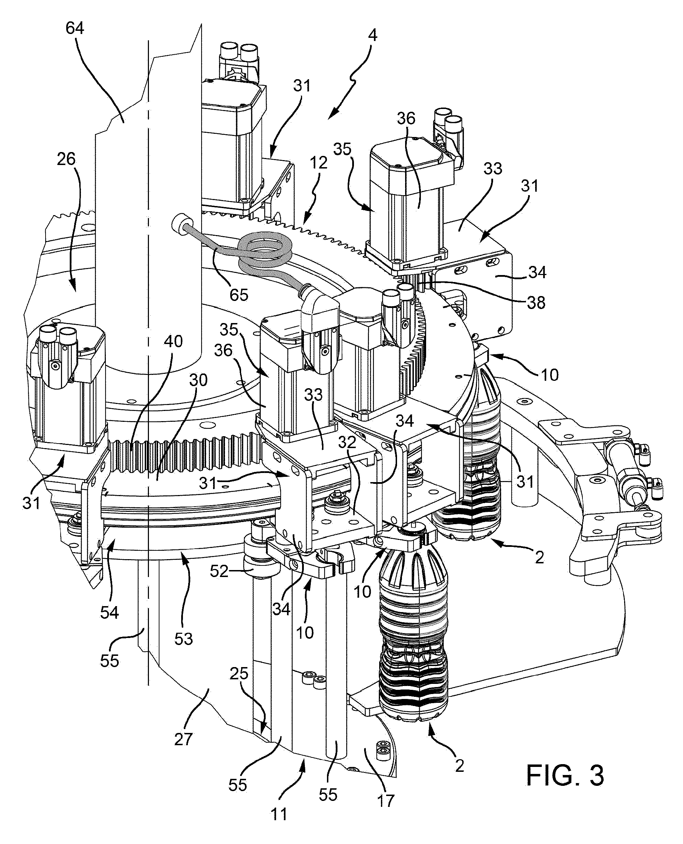

In particular, guide element 30 is defined by an annular bar mounted onto peripheral portion of rotating table 26 so as to radially protrude slightly therefrom. In a similar manner, each carriage 31 is mounted on guide element 30 so as to radially protrude therefrom with respect to axis A. In the example shown, each carriage 31 has a quadrangular-frame structure open at opposite radial sides and comprises (Figure 3) a bottom wall 32, a top wall 33 and two side walls 34; each gripping member 10 is suspended from bottom wall 32 of the relative carriage 31 so as to be able to interact with the neck of a respective bottle 2.

Both side walls 34 of each carriage 31 have respective C-shaped configurations to couple in a sliding manner with an outer side of guide element 30.

Each carriage 31 is advantageously equipped with its own electric motor 35, preferably a servomotor, so as to move along guide element 30 independently from the other carriages 31.

In particular, each motor 35 has a casing 36, secured on top wall 33 of the relative carriage 31 and projecting therefrom vertically upwards, and an output shaft (known per se and not shown) extending parallel to axis A, supported by casing 36 in a rotating manner about its axis and angularly coupled to a cog 38, in turn meshing with an annular spur gear 40 secured or integral to rotating table 26.

In view of the above, each carriage 31 and therefore each gripping member 10 have a global motion which is the result of the combination of:
- a primary angular motion of rotating table 26 with respect to support structure 11; and
- a secondary angular motion of the carriage 31 itself along guide element 30 with respect to the rotating table 26.

In particular, the tangential velocity of the rotating table 26 is conveniently set between the velocity V1 of the bottles 2 along path P and the velocity V2 or V3 of the bottles 2 along the respective path Q. Such tangential velocity is usually maintained constant; it may be altered only to manage variations in the values of the velocity V1 or of the velocity V2 or V3.

The velocity of each carriage 31 with respect to the tangential velocity of rotating table 26 is varied between a maximum (in absolute value) negative value and a maximum positive value depending on the angular position of the carriage 31 itself. This means that each carriage 31 moves back and forth with respect to an ideal zero point on rotating table 26, effectively changing the pitch between two consecutive gripping members 10 in the course of a complete rotation. The combination of the primary and secondary angular motions results in a variable velocity profile of each gripping member 10 with two fixed values: the velocity V1 at which bottles 2 are received by conveying wheel 4 from primary conveyor 3 and the velocity V2 or V3 at which the bottles 2 are delivered from the conveying wheel 4 itself to the respective secondary conveyor 6.

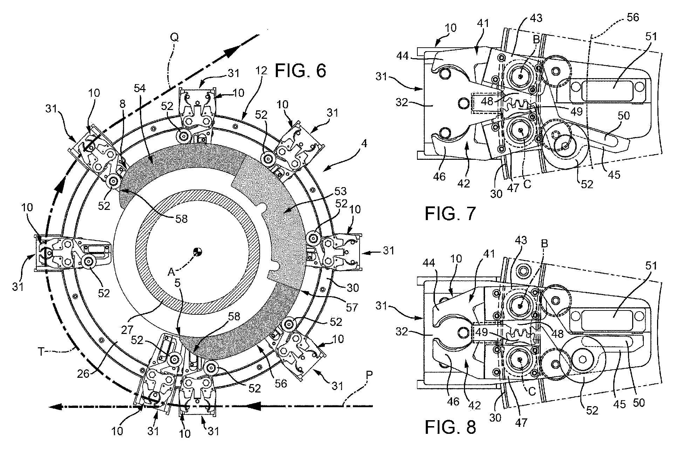

With particular reference to Figures 6 to 8, each gripping member 10 comprises a main gripping arm 41 and a secondary gripping arm 42, facing to one another, hinged to bottom wall 32 of the respective carriage 31 about respective axes B, C, parallel to axis A, and cooperating to pick up a respective bottle 2 at pick-up station 5, to retain it along path T and to release it at outlet station 8.

Each gripping member 10 is movable between a closed position (Figure 8), in which main and secondary gripping arms 41, 42 retain therebetween a respective bottle 2 by its neck, and an open position (Figure 7), in which main and secondary gripping arms 41, 42 are moved away from one another with respect to the closed position to allow engagement or release of a respective bottle 2.

Main gripping arm 41 of each gripping member 10 comprises:
- an intermediate portion 43 hinged to bottom wall 32 of the respective carriage 31 about axis B;
- an arcuate head portion 44 adapted to cooperate with one side of the neck of a respective bottle 2; and
- a driving portion 45 arranged on the opposite side of intermediate portion 43 with respect to head portion 44 and adapted to receive activation forces, as it will explained later on.

Secondary gripping arm 42 of each gripping member 10 has a smaller length than that of main gripping arm 41 and comprises:
- an arcuate head portion 46 facing and cooperating with head portion 44 of the main gripping arm 41 to encircle the neck of a respective bottle 2; and
- a linking portion 47 facing intermediate portion 43 of main gripping arm 41 and hinged to bottom wall 32 of the respective carriage 31 about axis C.

In particular, head portions 44 and 46 of main and secondary gripping arms 41, 42 of each gripping member 10 have facing concavities so as to cooperate in use with opposite sides of the neck of a respective bottle 2.

Intermediate portion 43 of main gripping arm 41 and linking portion 47 of secondary gripping arm 42 of each gripping member 10 have respective gear sectors 48, 49 meshing with one another in such a way that any angular motion imparted to main gripping arm 41 about axis B is transmitted to secondary gripping arm 42 about axis C in the opposite direction.

Main and secondary gripping arm 41, 42 of each gripping member 10 are maintained in the closed position in absence of external activation forces by attraction of a permanent magnet 50, carried by driving portion 45 of main gripping arm 41, with a permanent magnet 51 of opposite polarity, secured to bottom wall 32 of the respective carriage 31.

As a possible alternative not shown, magnets 50, 51 may be replaced by spring means.

Displacement of each gripping member 10 from the closed position to the open position is obtained by interaction of a cam follower 52, carried by driving portion 45 of main gripping arm 41, with a fixed cam 53 carried by support structure 11 and following in part path T.

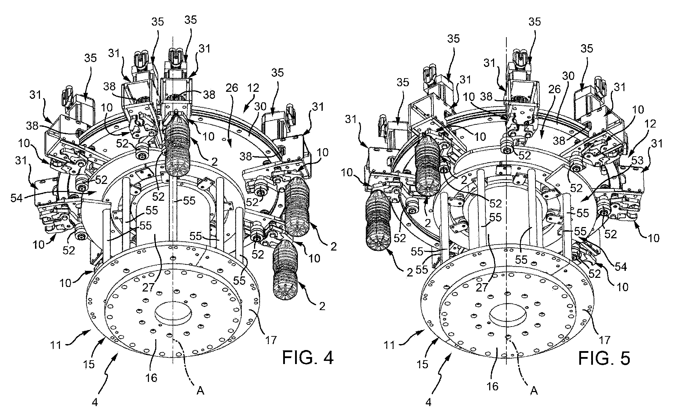

As shown in Figures 4 to 6, cam 53 is preferably defined by an arc-shaped bar 54 extending coaxial to, and around, axis A as well as parallel to path T and to guide element 30; bar 54 can be made in one piece or in a plurality of distinct pieces, like in the example shown where bar 54 is formed by three pieces. Bar 54 is arranged radially inner than guide element 30 with respect to axis A and is mounted on top of a plurality of uprights 55, vertically projecting from plate 17 of upper frame 15 of support structure 11.

Bar 54 is delimited by a radially outer cam profile 56 cooperating in use with cam follower 52 of each gripping member 10. In particular, cam profile 56 has a main portion 57 with constant diameter with respect to axis A and opposite ramp-shaped end portions 58 with decreasing diameters towards one another with respect to axis A.

Main portion 57 of cam profile 56 is configured to maintain gripping members 10 in the open position; where no interaction occurs between cam 53 and gripping members 10, i.e. between end portions 58 of cam profile 56, the gripping members 10 themselves are maintained in their closed positions by the attractive magnetic forces between respective pairs of magnets 50, 51; end portions 58 of cam profile 55 are specifically located in proximity of pick-up and outlet stations 5, 8 in order to cyclically impart to each gripping member 10 a closing movement, from the open position to the closed position, and an opening movement, from the closed position to the open position, respectively; in practice, opening and closing movements are cyclically imparted by cam 53 to each gripping member 10 at distinct and fixed portions of path T.

More specifically, pick-up station 5 is located at the end of radially decreasing ramp of the respective end portion 58 of cam profile 56, i.e. where cam followers 52 of gripping members 10 leave cam 53. Outlet station 8 is instead located at the end of the radially increasing ramp of the respective end portion 58 of cam profile 56, i.e. where such end portion 58 contact main portion 57.

With reference to Figures 1 and 2, apparatus 1 further comprises a sensor device 60, including one or more sensors, arranged upstream of conveying wheels 4 along path P and adapted to detect the positions of bottles 2 on primary conveyor 3, and a control unit 61 connected to sensor device 60 and configured to control the angular position of each gripping member 10 on each conveying wheel 4 in such a way to bring one gripping member 10 at the respective pick-up station 5 when a bottle 2 to be transported to a given secondary conveyor 6 is passing by such pick-up station 5 or to bring no gripping member 10 at the respective pick-up station 5 when a bottle 2 to be left on primary conveyor 3 is passing by such pick-up station 5.

In particular, sensor device 60 is configured to detect whether a bottle 2 or a gap is present at a given check point along path P and to generate a corresponding sensorial signal S; control unit 61 manages distribution of bottles 2 on secondary conveyors 6 on the basis of sensorial signal S by imparting appropriate control signals C to respective drivers 62 of motors 35 of carriages 31 of each conveying wheel 4.

As visible in Figure 2, drivers 62 of motors 35 of each conveying wheel 4 are arranged within a casing 63 mounted on top of a tubular element 64, in turn coaxial to axis A and vertically protruding from rotating table 26; in particular, tubular element 64 is secured to rotating table 26 and is crossed by cables 65 (only one shown in Figure 3) connecting drivers 62 to motors 35.

The operation of apparatus 1 is described with reference to one bottle 2 and starting from a condition, in which such bottle 2 is advanced along path P by primary conveyor 3 towards conveying wheels 4.

When the bottle 2 passes by sensor device 60, the latter detects the position of the bottle 2 itself on primary conveyor 3 and generates a sensorial signal S for control unit 61 correlated to the detected position.

On the basis of the sensorial signal S, control unit 61 assigns the bottle 2 to a given secondary conveyor 6.

If the bottle 2 is assigned to the upstream secondary conveyor 6 with reference to path P, one gripping member 10 of the corresponding upstream conveying wheel 4 is controlled by control unit 61 in order to meet the designated bottle 2 at the respective pick-up station 5. In practice, control unit 61 generates a control signal C for the corresponding driver 62 driving the motor 35 of the carriage 31 carrying the gripping member 10 destined to pick up the designated bottle 2. On the basis of its angular position on the respective conveying wheel 4, such gripping member 10 may be simply advanced by rotation of movable portion 12 of the respective conveying wheel 4 or may be accelerated or slowed down with respect to the movable portion 12 itself by activation of the respective motor 35.

It should be observed that, if the tangential velocity of the gripping member 10 relative to the movable portion 12 of the respective conveying wheel 4 is zero, the gripping member 10 is moving at the velocity of the movable portion 12, which in general is different from the velocity V1 of bottles 2 on primary conveyor 3. However, the velocity of the gripping member 10 and the velocity of the bottle 2 to be picked up by such gripping member 2 must be the same in order to grip the bottle 2 itself.

Once arrived at the pick-up station 5, the gripping member 10 is moved from the open position to the closed position by interaction of its cam follower 52 with the radially decreasing ramp of the respective end portion 58 of cam profile 56 of cam 52 located in proximity of the pick-up station 5 itself.

The designated bottle 2 is then advanced by the upstream conveying wheel 4 towards the respective outlet station 8, where interaction of the cam follower 52 of the gripping member 10 with the other end portion 58 of the cam profile of the cam 52 produces the opening of the gripping member 10 itself, so releasing the bottle on the assigned secondary conveyor 6.

If the bottle 2 advancing on primary conveyor 3 is assigned to the downstream secondary conveyor 6, control unit 61 manages the upstream conveying wheel 4 in such a way that no gripping member 10 is found at the respective upstream pick-up station 5 when the bottle 2 itself is passing.

Then, the bottle 2 left on primary conveyor 3 by the upstream conveying wheel 4 reaches the downstream conveying wheel 4 to be picked-up by one gripping member 10 thereof in the same way as previously described with reference to the upstream conveying wheel 4 itself.

The opening and closing movements of all gripping members 10 of each conveying wheel 4 always occur at the same given portions of the respective path T.

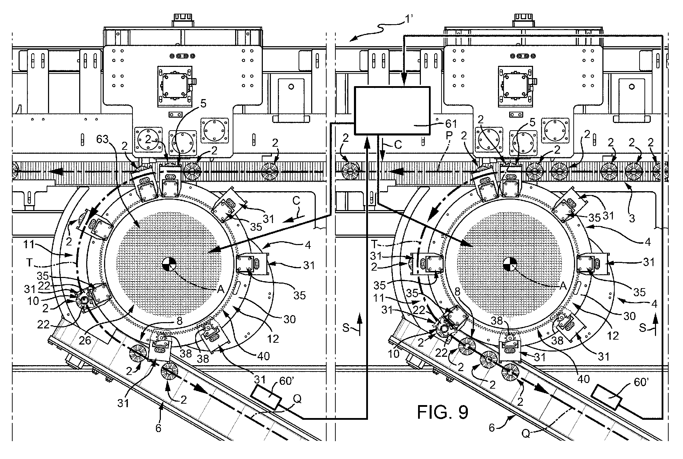

With reference to Figure 9, number 1' indicates as a whole a different embodiment of an apparatus made according to the present invention for handling articles, in particular containers and preferably bottles 2; as apparatus 1' is similar to apparatus 1, the following description is limited to the differences between them, by using the same references, where possible, for identical or corresponding parts.

In particular, apparatus 1' differs from apparatus 1 by having one sensor device 60' for each secondary conveyor 6 instead of having one sensor device 60 positioned on primary conveyor 3 upstream of the conveying wheels 4. As visible in Figure 9, each sensor device 60' is positioned along one respective secondary conveyor 6 downstream of the respective conveying wheels 4 and is preferably used to count the bottles conveyed along the secondary conveyor 6 itself.

In this case, instead of assigning the bottle 2 to be picked up to a particular conveying wheel 4 based on information on bottle positions gathered by sensor device 60 along primary conveyor 3, the incoming flow of bottles 2 is treated by control unit 61 as homogeneous, i.e. without gaps. This means that, in case of a gap, a given motorized gripping member 10 will try to grip one bottle 2 from an empty slot in the incoming flow. This, in turn, will create a gap on the respective secondary conveyor 6.

Each sensor device 60' counts the bottles 2 on the respective secondary conveyor 6. Based on this information, the control unit 61 operates to average the number of bottles 2 on the secondary conveyors 6 and generates the corresponding control signals C for drivers 62. The gaps are then to be closed prior to releasing the bottles 2 on the respective secondary conveyors 6 by appropriately varying the velocities and angular positions of the gripping members 10 on the interested conveying wheels 4.

By considering one single conveying wheel 4, control units 61 operates to maintain a preset proportion between the bottles 2 remaining on the primary conveyor 3 and the bottles 2 transferred to the respective secondary conveyor 6.

As a possible alternative not shown, the absence of a bottle 2 may be also detected by measuring the current peak of the motor 35 of the empty gripping member 10 during the variation of velocity of such gripping member 10. As a matter of fact, the absence of the bottle 2 translates into a lower total weight to be transported by the respective carriage 31 than in normal conditions and in consequent lower current requested by the respective motor 35.

The advantages of conveying wheel 4 as well as of apparatus 1, 1' according to the present invention will be clear from the foregoing description.

In particular, each conveying wheel 4 can receive bottles 2 from primary conveyor 3 at given velocity and pitch and can deliver them to the respective secondary conveyor 6 at different velocity and pitch.

This result can be achieved with a reduced number of motors and a simplified control system with respect to the known conveying wheels capable of performing a change of velocity of the transported articles.

In addition, the performance of the conveying wheels 4 can easily be matched to different types of applications by simply changing the number of gripping members 10.

The use of annular guide element 30, along which carriages 31 and gripping members 10 slide, permits to limit the radial bulk of the star wheel 4.

By conveniently setting the angular velocity of the movable portion 12, each carriage 31 and the respective gripping member 10 move back and forth around a zero angular point on the movable portion 12 itself.

As the drivers 62 are in rotation with the movable portion 12, a simple rotary joint along with the slack in the cables 65 is sufficient to feed power and data to all motors 35, without any necessity to use costly slip rings for each individual motor 35.

Clearly, changes may be made to conveying wheel 4 and apparatus 1, 1' as described herein without, however, departing from the scope of protection as defined in the accompanying claims.

## Claims

1. A conveying wheel (4) for transporting articles (2), in particular containers or bottles, comprising:
- a fixed support structure (11); and
- a plurality of gripping members (10) mounted on said support structure (11) in a movable manner along an annular transport path (T) having a central axis (A), said gripping members (10) being configured to hold and transport individual articles (2);
**characterized by** further comprising:
- an annular guide element (30) carried by said support structure (11) and extending coaxial to said central axis (A); and
- driving means (62, 35) to move said gripping members (10) independently from each other along said guide element (30).

2. The conveying wheel as claimed in claim 1, wherein said driving means comprise a plurality of motors (35), each one associated to one respective gripping member (10) and controlled independently from the other motors (35).

3. The conveying wheel as claimed in claim 2, wherein said motors (35) are servomotors and wherein said driving means comprise a plurality of drivers (62) to independently control said motors (35).

4. The conveying wheel as claimed in claim 2 or 3, further comprising a plurality of individual carriages (31) coupled in a sliding manner with the guide element (30) and each of which carrying one respective gripping member (10) and one respective motor (35).

5. The conveying wheel as claimed in any one of the foregoing claims, further comprising a movable portion (12) mounted on said fixed structure (11) in a rotating manner about said central axis (A) and carrying said guide element (30).

6. The conveying wheel as claimed in claim 5, wherein said movable portion (12) comprises a rotating table (26) and an annular spur gear (40) secured or integral to the rotating table (26); and wherein said driving means further comprise a plurality of cogs (38) rotated by the respective motors (35) and meshing with said annular spur gear (40) to impart motion of said gripping members (10) along said guide element (30).

7. The conveying wheel as claimed in any one of the foregoing claims, wherein each gripping member (10) is also movable between a closed position, in which it retains a respective article (2), and an open position, in which it allows engagement or release of a respective article (2); the conveying wheel (4) further comprising control means (53) to cyclically impart each gripping member (10) closing and opening movements respectively to said closed and open positions.

8. The conveying wheel as claimed in claim 7, wherein said control means comprise fixed cam means (53) carried by said support structure (11), following at least in part said transport path (T) and configured to impart cyclically to each gripping member (10) said opening and closing movements at distinct portions of said transport path (T).

9. The conveying wheel as claimed in any one of claims 5 to 8, comprising a further motor (19), which is independent from the motors (35) associated to the individual gripping members (10) and which can be selectively activated to rotate said movable portion (12) with respect to said support structure (11) about said central axis (A).

10. An apparatus (1, 1') for handling articles (2) comprising:
- a primary conveyor (3) advancing a plurality of articles (2) along a first path (P);
- at least one conveying wheel (4) as claimed in any one of the foregoing claims and which is configured to selectively pick-up articles (2) from the primary conveyor (3) at a pick-up station (5) and to transfer them away from the pick-up station (5) itself;
- at least one secondary conveyor (6) arranged adjacent to said conveying wheel (4) at an outlet station (8) and configured to receive, at said outlet station (6), the articles (2) picked up from the primary conveyor (3) and to advance said articles (2) along a second path (Q), distinct from the first path (P); and
- a control unit (61) configured to control the angular position of each gripping member (10) on the conveying wheel (4) in such a way to bring one gripping member (10) at said pick-up station (5) when an article (2) to be transported to said secondary conveyor (6) is passing by said pick-up station (5) or to bring no gripping member (10) at said pick-up station (5) when an article (2) to be left on the primary conveyor (3) is passing by said pick-up station (5).

11. The apparatus as claimed in claim 10, further comprising sensor means (60) arranged upstream of the conveying wheel (4) along said first path (P) and adapted to detect the positions of the articles (2) on the primary conveyor (3); said control unit (61) being connected to said sensor means (60) and controlling the angular positions of the gripping members (10) along the guide element (30) of the conveying wheel (4) as a function of the detected positions of the articles (2) on the primary conveyor (3).

12. The apparatus as claimed in claim 10, further comprising sensor means (60') arranged downstream of the conveying wheel (4) along said second path (Q) and adapted to count the articles (2) conveyed by the secondary conveyor (3); said control unit (61) being connected to said sensor means (60) and controlling the angular positions of the gripping members (10) along the guide element (30) of the conveying wheel (4) as a function of the detected number of articles (2) conveyed by the secondary conveyor (3) and in such a way to maintain a preset proportion between the articles (2) remaining on the primary conveyor (3) and the articles (2) transferred to the secondary conveyor (6).

13. The apparatus as claimed in any one of claims 10 to 12, wherein said secondary conveyor (6) is configured to advance the articles (2) at a first velocity (V1) and said primary conveyor (3) is configured to advance the articles (2) at a second velocity (V2, V3) different from said first velocity (V2).

14. The apparatus as claimed in any one of claims 10 to 13, wherein said transport path (T) of said gripping members (10) is tangent to said first path (P) at said pick-up station (5), and wherein said second path (Q) is tangent to said transport path (T) of said gripping members (10) at said outlet station (8).

15. The apparatus as claimed in any one of claims 10 to 14, comprising two or more conveying wheels (4), arranged adjacent to the primary conveyor (3) at respective said pick-up stations (5) placed up one after the other along said first path (P), and a number of secondary conveyors (6) corresponding to the number of conveying wheels (4) and arranged adjacent to the respective conveying wheels (4) at respective said outlet stations (8).
